(19)

Europäisches
Patentamt

European
Patent Office

Office européen
des brevets

(11) **EP 1 780 968 A1**

(12) **EUROPEAN PATENT APPLICATION**

(43) Date of publication:
**02.05.2007 Bulletin 2007/18**

(51) Int Cl.:
**H04L 27/26** (2006.01)

(21) Application number: **05292301.8**

(22) Date of filing: **28.10.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(71) Applicant: **Alcatel Lucent**<br>**75008 Paris (FR)** | (72) Inventor: **Gerlach, Christian, Dr.**<br>**71254 Ditzingen (DE)**<br><br>(74) Representative: **Brose, Gerhard et al**<br>**Alcatel Lucent**<br>**Intellectual Property & Standards**<br>**70430 Stuttgart (DE)**<br><br>Remarks:<br>Amended claims in accordance with Rule 86 (2) EPC. |

(54) **OFDM based transmission in a cellular single frequency network with a pilot adapted channel multiplexing structure**

(57)     The invention concerns a method for transmission in a cellular single frequency network comprising at least one antenna (1A-1D. 2A-2D) in each cell with a pilot adapted channel multiplexing structure, whereby frequency blocks (FB1-FB3) of adjacent OFDM subcarriers with the pilot spreading sequence length fitting into the frequency bandwidth of each of said frequency blocks (FB1-FB3) are used for channel multiplexing, and the pilot spreading sequence length is sufficiently long to enable channel estimation using de-spreaded pilots, a base station, a mobile terminal and a mobile network therefor.

Fig. 6

**Description**

The invention relates to a method for transmission in a cellular single frequency network according to the preamble of claim 1, a mobile terminal according to the preamble of claim 17, a base station according to the preamble of claim 18, and a mobile network according to the preamble of claim 19.

Orthogonal Frequency Division Multiplexing (OFDM) radio systems are currently under discussion in many places as e.g. in 3GPP Technical Specification Group (TSG) Radio Access Network (RAN1). Such a radio system should be a single frequency network as W-CDMA (W-CDMA = Wideband Code Division Multiplexing Access) currently is.

The OFDM channel, that is the OFDM time-frequency grid shall be multiplexed between different users or mobile terminals. Some of them should be included in adaptive subcarrier allocation or frequency scheduling, some can benefit from interference coordination especially at the cell edge, for some beam-forming should be used to bring up the signal to interference plus noise ratio (SINR) and for some that have a good SINR value multiple input multiple output (MIMO) transmission can be used to increase the data throughput rate. Further for some users or mobile terminals beamforming can not be used because of their speed but an improved SINR value independent of the direction in which they are located is needed.

So there shall be dedicated data transmission to different mobile terminals and there shall be common control channel transmission, that all mobile terminals belonging to the cell must be able to receive independent of the reception condition they are currently in.

Further one goal is to work with few OFDM symbols or maybe only one OFDM symbol in a transmission time interval (TTI) that carry antenna pilot information and to allow a so-called micro sleep mode.

The object of the invention is to propose a method for beam-forming, MIMO transmission, frequency scheduling and interference coordination in OFDM systems with a pilot adapted channel multiplexing structure.

This object is achieved by a method according to the teaching of claim 1, a base station according to the teaching of claim 17, a mobile terminal according to the teaching of claim 18 and a mobile network according to the teaching of claim 19.

The main idea of the invention is to use for channel multiplexing frequency blocks of adjacent OFDM subcarriers with a frequency bandwidth of the frequency block, so that a pilot spreading sequence length fits in the bandwidth and the pilot spreading sequence length is sufficiently long to enable channel estimation by a mobile terminal at the cell edge and beyond and if necessary to perform channel estimation by using de-spreaded pilots.

Further developments of the invention can be gathered from the dependent claims and the following description.

In the following the invention will be explained further making reference to the attached drawings.

Fig. 1 schematically shows a sectorized cell layout with multiple antennas per sector and multiple cells in a hexagonal layout.

Fig. 2 schematically shows multi-antenna reception and interference in a cell overlapping region.

Fig. 3 schematically shows an OFDM time frequency grid with time division multiplexing (TDM) OFDM pilots in a cell.

Fig. 4 schematically shows the combination of frequency blocks with frequency diverse frequency patterns.

Fig. 5 schematically shows frequency diverse selected frequency blocks with imposed restrictions for interference coordination for 2 cells.

Fig. 6 schematically shows an OFDM time-frequency grid with 4 antenna pilots in one OFDM symbol.

Fig. 7 schematically shows a time division multiplexing structure with 4 antennas but pilots distributed over two OFDM symbols.

A mobile network according to the invention comprises mobile terminals and base stations.

Each of said mobile terminals is connected to one or multiple of said base stations, and the base stations are in turn connected via base station controllers to a core network.

The mobile terminals comprise the functionality of a mobile terminal for transmission and reception in a single frequency network as e.g. an OFDM network, i.e. they can be connected to a mobile network by means of a base station.

Furthermore, a mobile terminal according to the invention comprises means for receiving frequency blocks of adjacent OFDM subcarriers used for channel multiplexing comprising pilots with a pilot spreading sequence length that fits into the frequency bandwidth of each of said frequency blocks and that is sufficiently long to enable channel estimation, and the mobile terminal comprises means for performing channel estimation using said pilots with a pilot spreading sequence length sufficiently long to enable channel estimation.

The base stations comprise the functionality of a base station of a single frequency network as e.g. a WLAN or an OFDM network, i.e. they provide the possibility for mobile terminals to get connected to the mobile network.

The base stations comprise at least one antenna for sending to or receiving from mobile terminals signals or data.

Furthermore, a base station according to the invention comprises means for choosing frequency blocks of adjacent OFDM subcarriers used for channel multiplexing in such a way that the pilot spreading sequence length fits into the frequency bandwidth of each of said frequency blocks, and the base station comprises means for choosing the pilot spreading sequence length sufficiently long to enable channel estimation.

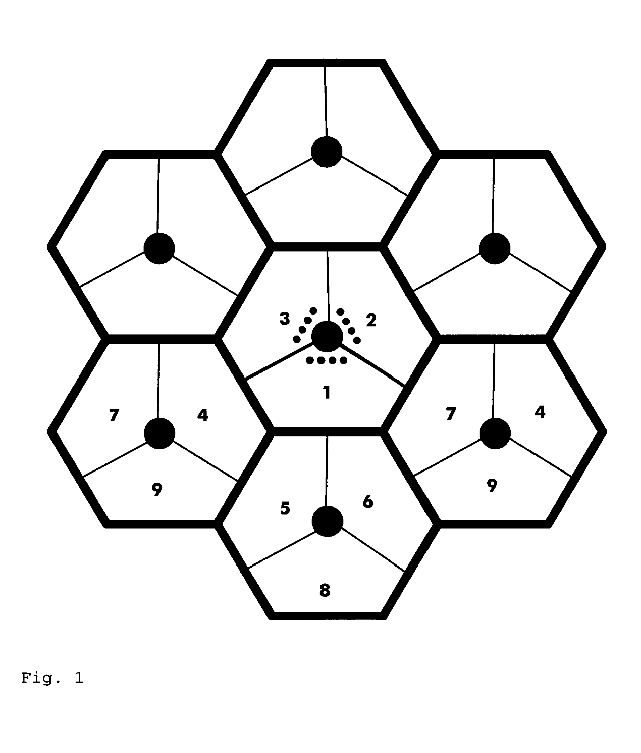

In the following, by way of example the method according to the invention is described in detail making reference to figs. 1 to 7.

Pilots in a TDM fashion can e.g. be used where in one or more OFDM symbols, e.g. out of 7 OFDM symbols in a time frame, pilot subcarriers are placed. These pilot subcarriers are used for one or multiple antenna transmission and are set antenna specific. The scenario for e.g. 4 antennas per sector is exemplarily depicted in fig. 1 for a considered sectorized cell with the sectors being denoted with 1,2 and 3. In each of the sectors 1, 2 and 3 four antennas are assumed that are depicted as dots. The neighbor cells also possess these sectors with multiple antennas which can e.g. all transmit antenna specific pilots.

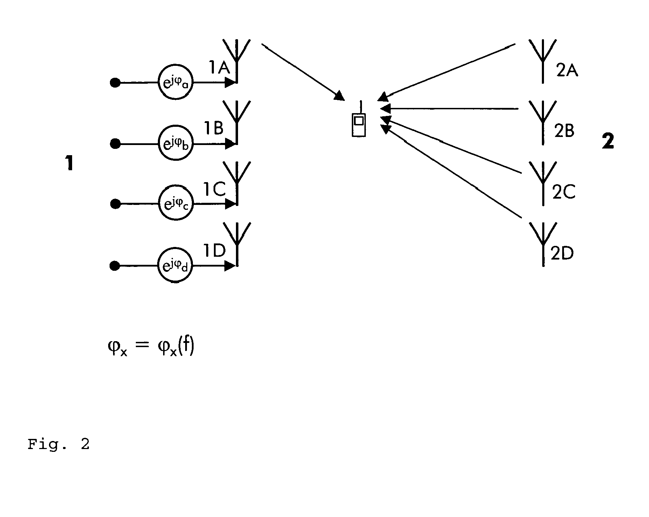

Fig. 2 shows the four antennas 1A, 1B, 1C and 1D from sector 1 and the four antennas 2A, 2B, 2C and 2D from sector 2. The transmitted pilots must be suited to allow channel estimation also for a mobile terminal in the interference region between two sectors or two cells. The mobile terminal shall measure an antenna specific pilot from antenna 1A of cell 1 and it has to cope with four times interference from the four antennas from cell 2.

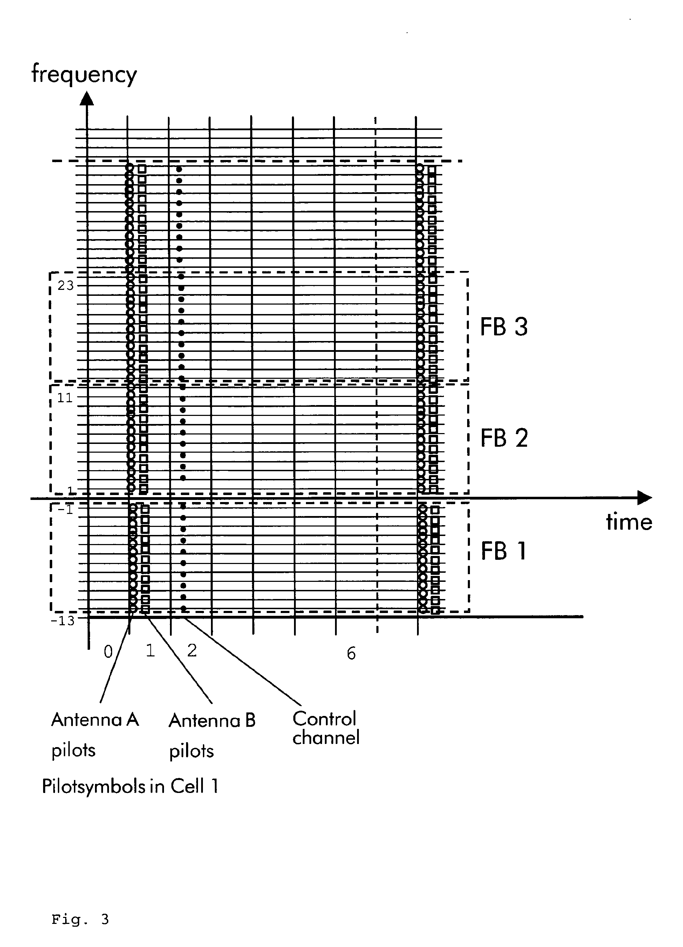

The TDM pilot configuration is depicted in fig. 3. Here the subcarrier frequency is plotted against the time. A data time frame unit also called TTI interval consists of s OFDM symbols. In fig.3, a TTI interval of e.g. 0,5 ms exemplarily consists of s=7 OFDM symbols denoted with 0, 1,...6. Each OFDM symbol has a number M useful subcarriers with e.g. M=72 along the frequency axis on which pilots or data could be placed. The OFDM symbol carrying the pilot information is in fig. 3 the OFDM symbol denoted 1. The OFDM symbols carrying the pilot information usually carry pilots only, but they could also carry pilot and data.

In order not to need a pilot coordination between neighboring cells the pilot subcarrier symbols shall have approximately the same power as the data subcarrier symbols and a configuration with pilot spreading and a cell specific scrambling code shall be used. So for each antenna an antenna specific spreading sequence shall be used as depicted as circles or as squares in fig. 3.

Further to randomize the impact to or from neighbor cells that are not time synchronized and that can not be coordinated, a cell specific scrambling e.g. along the frequency axis for all pilot symbols shall be used. This avoids possible pilot to pilot interference.

By the gain from de-spreading of the pilot, it is achieved that the pilot signal level is much higher than the interference which allows channel estimation even if a mobile terminal is in a cell overlapping region and experiences a signal to interference ratio SIR ≈-7...-8 dB. For this a de-spreading gain of about 6 is necessary.

The antennas belonging to neighboring sectors of one base station can at least be considered synchronized. So orthogonal spreading sequences specific to the antenna are employed in one cell. Then the two or more antenna pilots on one OFDM symbol in one sector or on neighboring sectors can be considered orthogonal in the receiver if the channel transfer function is approximately constant along the spreading sequence length. This allows estimation of all channel transfer functions for each transmission antenna.

If in case of two antennas in each sector, for example the Quadrature Phase Shift Keying data amplitude is $|d|=\ ^1/_{\sqrt{2}}$ for one neighbor cell antenna and the pilot subcarrier amplitude for one serving cell antenna is also $|p|=\ ^1/_{\sqrt{2}}$ the pilot power for one serving cell antenna on one subcarrier would be $|p|^2=\frac{1}{2}$ and in case of loss less channel transfer function for the interferer the power of the interferer on one subcarrier from all neighbor cell's antennas could be $|d_A|^2+|d_B|^2=\frac{1}{2}+\frac{1}{2}=1$. Then in case of a pilot spreading with spreading factor SF=12 a gain of

$$\frac{SF\cdot|p|^2}{|d_A|^2+|d_B|^2}=\frac{12\cdot\frac{1}{2}}{1}=6$$ would be achieved which allows channel estimation maybe down to an SIR of -6 to -7 dB. This spreading factor might be sufficient for operation in the cell overlapping region before a handover to the neighbor cell takes place. So a length of 12 would be necessary for the pilot spreading sequence.

The control channel data is transmitted with the pilots or in OFDM symbols next to the pilot information distributed in time just over a single OFDM symbol. This way the channel estimation is very good when applied to the common control channel symbols. Further in a so called micro-sleep mode it is possible for the mobile terminal to receive the pilot information in one OFDM symbol and decode the control channel in the next OFDM symbol and if not addressed by the base station to fall asleep, i.e. to switch off the signal processing and omit reception of all other OFDM symbols in the TTI in order to save power.

Further, antenna weights or phase factors $e^{i\varphi}{}_x$ as shown in fig. 2 are set and used for the multi-antenna transmission and the power and function is distributed to the antenna pilots. The system shall then also work in a time unsynchronized multi-cell network.

According to the invention, for channel multiplexing frequency blocks of adjacent OFDM subcarriers are used with a frequency bandwidth of the block, so that the pilot spreading sequence length fits in the bandwidth and the pilot spreading sequence length is sufficiently long to enable channel estimation by a mobile terminal at the cell edge and beyond, and if necessary channel estimation by using de-spreaded pilots is performed.

The frequency blocks are shown in fig. 3 and are denoted FB1, FB2, FB3 etc.

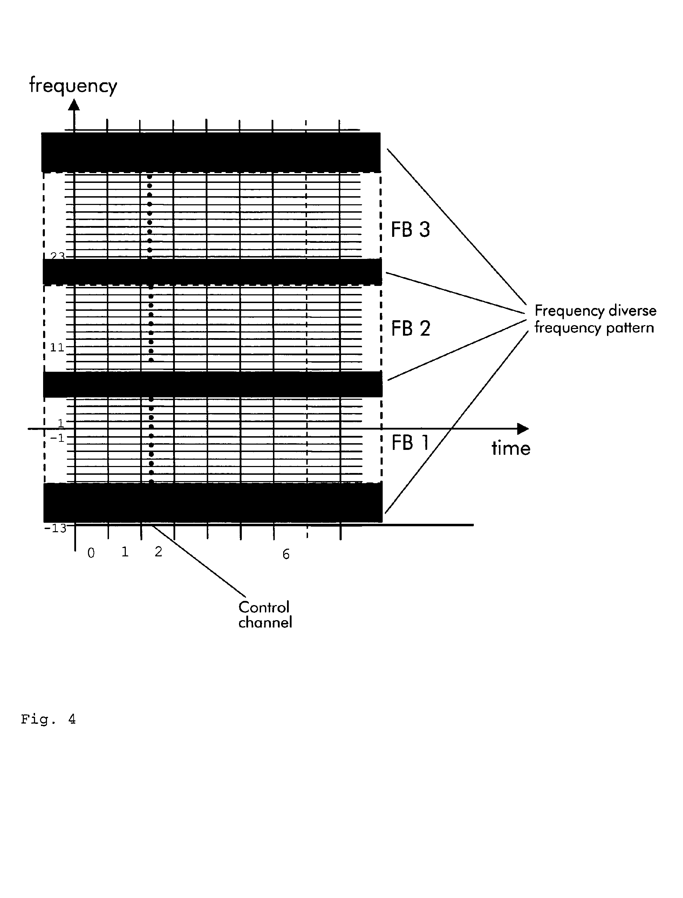

In an embodiment of the invention, said frequency blocks are combined with frequency diverse frequency patterns that are e.g. inserted in comb-like fashion between the frequency blocks. These can be used for control information or e.g. for Multi-media broadcast (MBMS) information as shown in fig. 4.

In an embodiment of the invention, inside frequency blocks subcarriers of one or more OFDM symbols are allocated to a common control channel.

In an embodiment of the invention frequency block specific antenna weights for each block or frequency pattern specific antenna weights for each pattern are used. Inside the blocks these weights may further be different for control and one or more data parts.

In an embodiment of the invention the data parts of said frequency blocks are allocated to different users that are in different channel conditions for the purpose of beamforming, MIMO transmission, frequency scheduling or interference coordination, to make inside these allocated blocks by proper distribution on antennas, by proper configuration of antenna pilots and antenna weights if necessary an omni-directional transmission of the control data also for very far distant located users and at the same time for the dedicated data a beamforming or MIMO transmission or normal transmission depending on the frequency block and the user, and said frequency block allocation or scheduling is done based on measurements of channel estimation or pilot measurements or interference measurements or measures with respect to throughput enhancement of the specific user or based on calculated anticipated throughput for MIMO or beam-forming transmission.

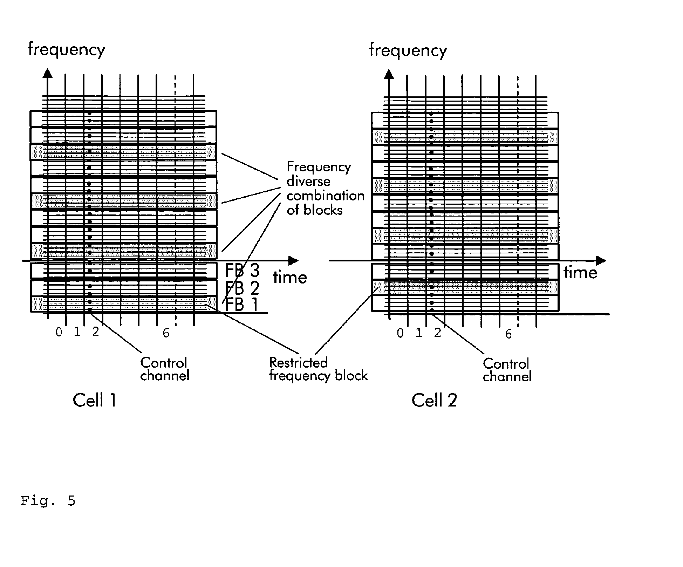

In an embodiment of the invention in each sector or cell certain combinations of frequency diverse positioned frequency blocks are selected as shown e.g. in fig. 5 in order to impose restrictions of power and usage on all frequency blocks in said combinations which are shown as dotted frequency blocks in the time-frequency grid for two cells cell 1 and cell 2. Said combinations can then be different between cells or sectors to enable mobile terminals to benefit from interference coordination i.e. improved SIR ratio by use of said frequency blocks at the border to the restricted cell.

In an embodiment of the invention antenna specific pilots and same pilots for multiple antennas with different power depending on their function, and to limit produced interference, are used.

In an embodiment of the invention the control information part of each frequency block is transmitted only over a single antenna with the antenna pilot raised appropriately in power and further a different antenna for control information transmission is selected depending on the frequency block to achieve a power balancing between antennas.

In an embodiment of the invention the power of the antenna pilot whose antenna transmits the control channel is boosted, another pilot is transmitted with beam-directing weights over part of all antennas, called set 1, and the data part is transmitted over all antennas using for set1 the same previously selected beam-directing weights for beamforming, the power of this other pilot transmitted over part of all antennas (set1) is attenuated to reduce interference especially outside the beam.

In an embodiment of the invention one frequency block is transmitted with one pilot only from one antenna for omnidirectional transmission and the pilot power is increased e.g. so to use up the maximum aggregated power available for all pilots.

In an embodiment of the invention from each antenna an antenna specific pilot is transmitted in the pilot part of the frequency block e.g. without a phase factor, the power of the antenna pilot whose antenna transmits the control channel is boosted, the other pilots are attenuated such as to preserve the allowed aggregated pilot power for all pilots, and on each antenna, antenna specific data for MIMO transmission are transmitted.

In an embodiment of the invention the selection of proper distribution on antennas, pilot usage, power and the transmission mode as e.g. MIMO or beamforming transmission depends on the mobile terminal feedback.

The method includes to calculate the combined channel transfer function in beam-forming by weighted superposition of the single antenna specific measured channel transfer functions.

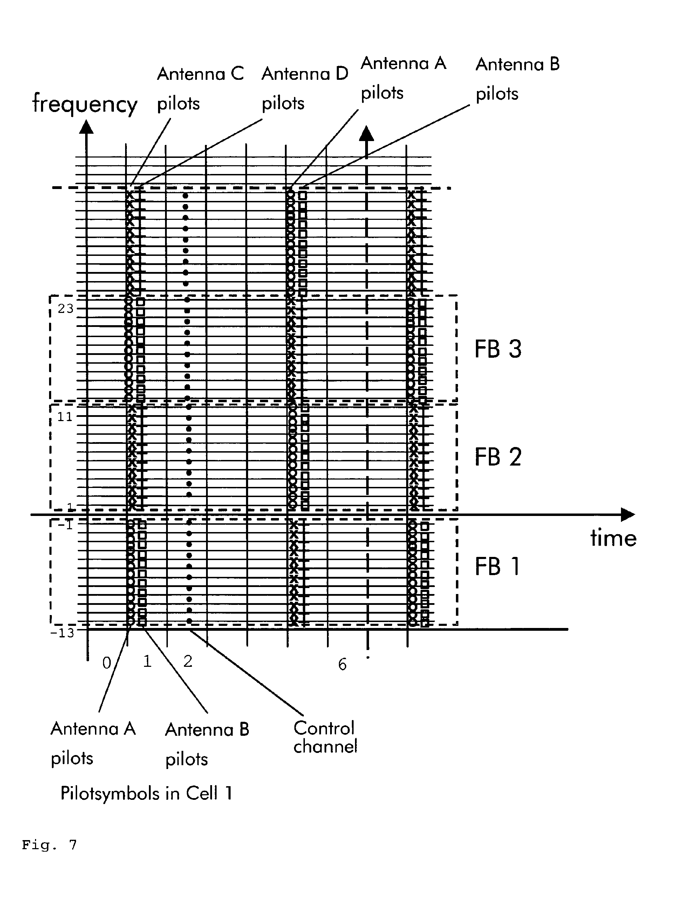

In an embodiment of the invention an antenna pilot configuration is used with some antenna pilot sequences in a different OFDM symbol interleaved with other antenna pilot sequences so that always in a frequency block a pilot sequence accompanies directly the control information which is transmitted by the same antenna as the pilot sequence is. This situation is depicted in fig. 7. Here, the pilot symbols for the antennas A and B are interleaved with the pilots for the antennas C and D in time direction and in frequency direction in the time-frequency grid for one cell.

In the following three embodiments are presented.

In a configuration with just 2 antennas per sector as shown in fig. 3 each antenna always transmits an antenna specific pilot. The width of the frequency blocks is 12 subcarriers and pilot sequences per antenna with a spreading factor SF=12 are used. The power of each pilot is $|p_A|^2 = |p_B|^2 = ½$ which is sufficient for channel estimation in all allowed or useful reception conditions. The control channel is just transmitted from one antenna only and the selected antenna alternates with each frequency block to achieve a power balancing between the antennas.

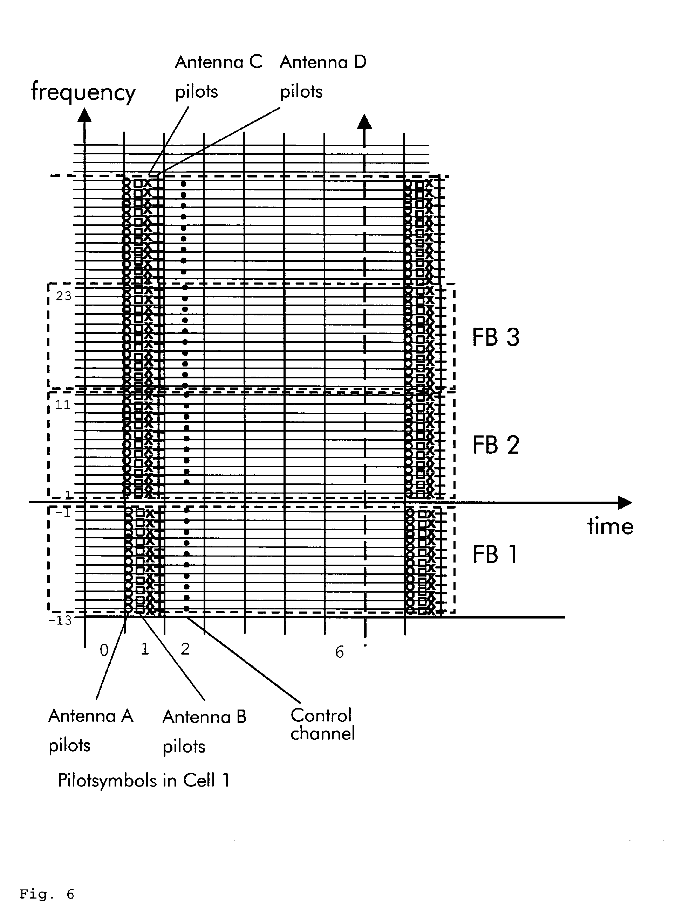

Further in fig. 6 a configuration with 4 antennas per sector is shown. The control data per frequency block FB1, FB2, ... etc. is transmitted from a single antenna. The selected antenna alternates with the frequency block, the corresponding antenna pilot is called the primary pilot on primary antenna e.g. depicted by the circles in frequency block FB1 or by the squares in FB2. It has a power $|p_p|^2$=½. The sum of all secondary antenna pilots $\Sigma|p_s|^2$ =½ is also only ½.

In case of beamforming only one secondary pilot sequence is transmitted over all remaining antennas with $|p_B|^2$=$|p_C|^2$=$|p_D|^2$=$^1/_{18}$ or =$^1/_6$ . In fig. 6 in FB1, the squares symbolizing antenna B pilots, the x-crosses symbolizing antenna C pilots and the plus signs symbolizing antenna C pilots are then identical in this frequency block FB1 in this case. The amplitudes inside the beam will then add up and the power amounts in the first case of the power setting above to $(^3/_{\sqrt{18}})^2$ =½ and in the second case to $(^3/_{\sqrt{6}})^2$ =$^3/_2$. The power outside the beam shall then add up on average to $^3/_{18}$=$^1/_6$ in the first case and $^3/_6$=½ in the second case. So the first case is more conservative in not disturbing other cells mobile terminals in data decoding or channel estimation. This power setting should be known to the mobile terminal.

The beam-directing antenna weights of the pilots are also used for the data. The combined channel transfer function $H_{tot}$ for the data transmission is found by weighted combination of the primary antenna and secondary antennas channel transfer functions $H_A$ and $H_{Btot}$ respectively. For example $H_{tot} = w_A H_A$ = wBHBtotwith e.g. $w_A = w_B$ = 1.

In case of MIMO transmission besides the primary pilot with power $|p_p|^2$= ½ three different antenna specific pilots are used inside the frequency block e.g. FB1 as depicted as squares, x-crosses or plus-signs in fig. 6. The power of the secondary pilots is $|p_B|^2$=$|p_C|^2$=$|p_D|^2$=$^1/_6$. Due to the reduced power the mobile terminal receiving MIMO transmission needs to be near enough to the base station antennas to successfully perform channel estimation for the secondary pilots. This reservation should not be too limiting, since for MIMO reception of the data in any case a good SINR ratio is needed.

If a certain antenna configuration is given for which antenna weights can be found that give an omni-directional radiation when transmitting over all four antennas, another possibility of pilot configuration is feasible. Then the primary pilot is transmitted over all four antennas with the found weight and the common control channel is transmitted also with those weights. The primary pilot power may e.g. be $|p_p|^2$= ½. Further a secondary, tertiary, quaternary etc. pilot is transmitted each over a single or over a part of all antennas with different antenna weights, corresponding to the dedicated transmitted data. For example in case of MIMO transmission each single antenna pilot corresponds to single antenna dedicated data and the power of the secondary, tertiary, quaternary and fifth pilot is $|p_\alpha|^2$=$|p_\beta|^2$=$|p_\gamma|^2$=$|p_\delta|^2$=⅛ .

In the third configuration in Fig. 7 now 4 antenna pilots positioned in an interleaved fashion are shown.

Each antenna always transmits an antenna specific pilot. The power of each pilot is $|p_A|^2$=$|p_B|^2$=$|p_C|^2$=$|p_D|^2$=½ which is sufficient for channel estimation in all allowed or useful reception conditions. The control channel is just transmitted from one antenna which is one of the two antennas that have their pilot in this frequency block near to the control information and the selected antenna alternates with each frequency block to achieve a power balancing between the antennas.

This configuration consumes more space for pilot information and leaves less for data transmission compared to the previous configurations.

With the described concept there is now a flexible solution for all kind of multiple-antenna techniques simultaneously allowing a micro-sleep mode.

It is a general flexible concept that allows all kinds of frequency selective and frequency diverse frequency patterns. It further allows a channel multiplexing for interference coordination and MIMO and beamforming transmission and frequency scheduling at the same time to maximally exploit the channel capacity of the radio channel.

As concerns avoiding pilot to pilot interference the solution now has higher flexibility as e.g. a necessary network pilot planning.

## Claims

1. A method for transmission in a cellular single frequency network comprising at least one antenna (1A-1D. 2A-2D) in each cell with a pilot adapted channel multiplexing structure, **characterized in, that**

   • frequency blocks (FB1-FB3) of adjacent OFDM subcarriers with the pilot spreading sequence length fitting into the frequency bandwidth of each of said frequency blocks (FB1-FB3) are used for channel multiplexing,
   • and the pilot spreading sequence length is sufficiently long to enable channel estimation using de-spreaded pilots.

2. A method according to claim 1, **characterized in, that** channel estimation is performed using said de-spreaded pilots.

3. A method according to claim 1, **characterized in, that** multiple pilot sequences for multiple antennas (1A-1D. 2A-2D) are placed in the same OFDM symbol of the same frequency block (FB1-FB3).

4. A method according to claim 1, **characterized in, that** frequency diverse frequency patterns are inserted between the frequency blocks (FB1-FB3).

5. A method according to claim 1, **characterized in, that** inside at least one frequency block (FB1-FB3) the subcarriers of at least one OFDM symbol are allocated to a common control channel.

6. A method according to claim 1, **characterized in, that** frequency block (FB1-FB3) specific antenna weights or frequency pattern specific antenna weights are used.

7. A method according to claim 6, **characterized in, that** inside of a frequency block (FB1-FB3), said antenna weights are further different for control and at least one data part.

8. A method according to claim 1, **characterized in, that**

   • the data parts of said frequency blocks (FB1-FB3) are allocated to different users that are in different channel conditions for the purpose of beamforming, MIMO transmission, frequency scheduling or interference coordination,
   • and inside said allocated frequency blocks (FB1-FB3) by proper distribution on antennas (1A-1D. 2A-2D), by proper configuration of antenna pilots and antenna weights an omni-directional transmission of control data also for very far distant located users and at the same time for dedicated data a beamforming or MIMO transmission or a normal transmission depending on the frequency block (FB1-FB3) and the user is performed,
   • and said frequency block (FB1-FB3) allocation is based on measurements of channel estimation, pilot measurements, interference measurements, measures with respect to throughput enhancement of a specific user or calculated anticipated throughput for MIMO or beamforming transmission.

9. A method according to claim 1, **characterized in, that** in a sector or a cell certain combinations of frequency diverse positioned frequency blocks are selected in order to impose restrictions of power and usage on the frequency blocks in said combinations and the scheduler can use said restrictions to benefit from interference coordination.

10. A method according to claim 1, **characterized in, that** antenna specific pilots and same pilots for multiple antennas (1A-1D. 2A-2D) with different power depending on their function, and to limit produced interference, are used.

11. A method according to claim 5, **characterized in, that** the control information is transmitted with broad radiation pattern over multiple antennas (1A-1D. 2A-2D).

12. A method according to claim 1, **characterized in, that** the control information part of each frequency block (FB1-FB3) is transmitted only over a single antenna (1A-1D. 2A-2D) with the antenna pilot raised appropriately in power and a different antenna (1A-1D. 2A-2D) is selected depending on the frequency block (FB1-FB3) to achieve a power balancing between antennas (1A-1D. 2A-2D).

13. A method according to claim 1, **characterized in, that** the power of the antenna pilot whose antenna (1A-1D. 2A-2D) transmits the control channel is boosted, another pilot is transmitted with beam-directing weights over part of all antennas (1A-1D. 2A-2D), the data part is transmitted over all antennas (1A-1D. 2A-2D) using for said part of all antennas (1A-1D. 2A-2D) the same previously selected beam-directing weights for beamforming, and the power of said other pilot transmitted over part of all antennas (1A-1D. 2A-2D) is attenuated to reduce interference.

14. A method according to claim 1, **characterized in, that** one frequency block (FB1-FB3) is transmitted with one pilot only from one antenna (1A-1D. 2A-2D) for omnidirectional transmission and the pilot power is increased so to use up the maximum aggregated power available for all pilots.

15. A method according to claim 1, **characterized in, that** from each antenna (1A-1D. 2A-2D) an antenna specific pilot is transmitted in the pilot part of the frequency block (FB1-FB3)

16. without a phase factor, the power of the antenna pilot whose antenna (1A-1D. 2A-2D) transmits the control channel is boosted, the other pilots are attenuated in such a way as to preserve the allowed aggregated pilot power for all pilots, and on each antenna (1A-1D. 2A-2D), antenna specific data for MIMO transmission are transmitted.

17. A method according to claim 13, 14 or 15 in which the proper distribution on antennas (1A-1D. 2A-2D), pilot usage, power and transmission mode selection is based on terminal feedback.

18. A mobile terminal for transmission in a cellular single frequency network comprising at least one antenna (1A-1D. 2A-2D) in each cell with a pilot adapted channel multiplexing structure, **characterized in, that**

   • the mobile terminal comprises means for receiving frequency blocks (FB1-FB3) of adjacent OFDM subcarriers used for channel multiplexing comprising pilots with a pilot spreading sequence length that fits into the frequency bandwidth of each of said frequency blocks (FB1-FB3) and that is sufficiently long to enable channel estimation,

• and the mobile terminal comprises means for performing channel estimation using said pilots with a pilot spreading sequence length sufficiently long to enable channel estimation.

**19.** A base station for transmission in a cellular single frequency network comprising at least one antenna (1A-1D. 2A-2D) in each cell with a pilot adapted channel multiplexing structure, **characterized in, that**

• the base station comprises means for choosing frequency blocks (FB1-FB3) of adjacent OFDM subcarriers used for channel multiplexing in such a way that the pilot spreading sequence length fits into the frequency bandwidth of each of said frequency blocks (FB1-FB3),

• and the base station comprises means for choosing the pilot spreading sequence length sufficiently long to enable channel estimation.

**20.** A mobile network comprising mobile terminals according to claim 17 and base stations according to claim 18 for performing a method according to claim 1.

**Amended claims in accordance with Rule 86(2) EPC.**

**1.** A method for transmission in a cellular single frequency network comprising at least one antenna (1A-1D. 2A-2D) in each cell with a pilot adapted channel multiplexing structure, **characterized in, that**

• on OFDM subcarriers of an OFDM symbol either data or pilots are placed,

• frequency blocks (FB1-FB3) of adjacent OFDM subcarriers with the pilot spreading sequence length fitting into the frequency bandwidth of each of said frequency blocks(FB1-FB3) are used for channel multiplexing,

• and the pilot spreading sequence has at least a length that provides a gain that is sufficiently high to enable channel estimation using despreaded pilots for the mobile terminal that experiences the worst signal to interference ratio in the respective cell.

**2.** A method according to claim 1, **characterized in, that** channel estimation is performed using said despreaded pilots.

**3.** A method according to claim 1, **characterized in, that** multiple pilot sequences for multiple antennas (1A-1D. 2A-2D) area placed in the same OFDM symbol of the same frequency block (FB1-FB3).

**4.** A method according to claim 1, **characterized in, that** frequency diverse frequency patterns are inserted between the frequency blocks (FB1-FB3).

**5.** A method according to claim 1, **characterized in, that** inside at least one frequency block (FB1-FB3) the subcarriers of at least one OFDM symbol are allocated to a common control channel.

**6.** A method according to claim 1, **characterized in, that** frequency block (FB1-FB3) specific antenna weights or frequency pattern specific antenna weights are used.

**7.** A method according to claim 6, **characterized in, that** inside of a frequency block (FB1-FB3), said antenna weights are further different for control and at least one data part.

**8.** A method according to claim 1, **characterized in, that**

• the data parts of said frequency blocks (FB1-FB3) are allocated to different users that are in different channel conditions for the purpose of beamforming, MIMO transmission, frequency scheduling or interference coordination,

• and inside said frequency blocks (FB1-FB3) by proper distribution on antennas (1A-1D. 2A-2D), by proper configuration of antenna pilots and antenna weights an omni-directional transmission of control data also for very far distant located users and at the same time for dedicated data a beamforming or MIMO transmission or a transmission using frequency scheduling or interference coordination depending on the frequency block (FB1-FB3) and the user is performed,

• and an allocation of said frequency blocks (FB1-FB3) is based on measurements of channel estimation, pilot measurements, interference measurements, measures with respect to throughput enhancement of a specific user or calculated anticipated throughput for MIMO or beamforming transmission.

**9.** A method according to claim 1, **characterized in, that** in a sector or a cell certain combinations of frequency diverse positioned frequency blocks are selected in order to impose restrictions of power and usage on the frequency blocks in said combinations and the scheduler can use said restrictions to benefit from interference coordination.

**10.** A method according to claim 1, **characterized in, that** antenna specific pilots and same pilots for multiple antennas (1A-1D. 2A-2D) with different power depending on whether the pilot is antenna specific or whether the pilot is transmitted over multiple antennas, and to limit produced interference, are used.

**11.** A method according to claim 5, **characterized in, that** the control information is transmitted with broad radiation pattern over multiple antennas (1A-1D. 2A-2D).

**12.** A method according to claim 1, **characterized in, that** the control information part of each frequency block (FB1-FB3) is transmitted only over a single antenna (1A-1D. 2A-2D) with the antenna pilot raised appropriately in power to allow for channel estimation at the cell edge and beyond and a different antenna (1A-1D. 2A-2D) for control information transmission is selected depending on the frequency block (FB1-FB3) to achieve a power balancing between antennas (1A-1D. 2A-2D).

**13.** A method according to claim 1, **characterized in, that** the power of the antenna specific pilot whose antenna (1A-1D. 2A-2D) transmits the control channel is boosted, another pilot is transmitted with beam-directing weights over part of all antennas (1A-1D. 2A-2D), the data part is transmitted over all antennas (1A-1D. 2A-2D) using for said part of all antennas (1A-1D. 2A-2D) the same previously selected beam-directing weights for beamforming, and the power of said other pilot transmitted over part of all antennas (1A-1D. 2A-2D) is attenuated to reduce interference.

**14.** A method according to claim 1, **characterized in, that** one frequency block (FB1-FB3) is transmitted with one pilot only from one antenna (1A-1D. 2A-2D) for omnidirectional transmission and the pilot power is increased so to use up the maximum aggregated power available for all pilots.

**15.** A method according to claim 1, **characterized in, that** from each antenna (1A-1D. 2A-2D) an antenna specific pilot is transmitted in the pilot part of the frequency block (FB1-FB3) without a phase factor, the power of the antenna specific pilot whose antenna (1A-1D. 2A-2D) transmits the control channel is boosted, the other pilots are attenuated in such a way as to preserve the allowed aggregated pilot power for all pilots, and on each antenna (1AID. 2A-2D), antenna specific data for MIMO transmission are transmitted.

**16.** A method according to claim 13, 14 or 15 in which the proper distribution on antennas (1A-1D. 2A-2D), pilot usage, power and transmission mode selection is based on terminal feedback.

**17.** A mobile terminal for transmission in a cellular single frequency network comprising at least one antenna (1A-1D. 2A-2D) in each cell with a pilot adapted channel multiplexing structure, **characterized in, that**

• the mobile terminal comprises means for receiving frequency blocks (FB1-FB3) of adjacent OFDM subcarriers used for channel multiplexing comprising pilots with a pilot spreading sequence length that fits into the frequency bandwidth of each of said frequency blocks (FB1-FB3) and that is sufficiently long to enable channel estimation,
• and the mobile terminal comprises means for performing channel estimation using said pilots with a pilot spreading sequence length sufficiently long to enable channel estimation.

**18.** A base station for transmission in a cellular single frequency network comprising at least one antenna (1A-1D. 2A-2D) in each cell with a pilot adapted channel multiplexing structure, **characterized in, that**

• the base station comprises means for placing on OFDM subcarriers of an OFDM symbol either data or pilots,
• the base station comprises means for choosing frequency blocks (FB1-FB3) of adjacent OFDM subcarriers used for channel multiplexing in such a way that the pilot spreading sequence length fits into the frequency bandwidth of each of said frequency blocks (FB1-FB3),
• and the base station comprises means for choosing a pilot spreading sequence that has at least a length that provides a gain that is sufficiently long to enable channel estimation using despreaded pilots for the mobile terminal that experiences the worst signal to interference ratio in the respective cell.

**19.** A mobile network comprising mobile terminals according to claim 17 and base stations according to claim 18 for performing a method according to claim 1.

Fig. 1

$$\varphi_x = \varphi_x(f)$$

Fig. 2

Antenna A pilots  Antenna B pilots  Control channel

Pilotsymbols in Cell 1

Fig. 3

Fig. 4

Fig. 5

Fig. 6

Pilotsymbols in Cell 1

Fig. 7

European Patent
Office

**EUROPEAN SEARCH REPORT**

Application Number

EP 05 29 2301

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/053413 A1 (SAWAHASHI MAMORU ET AL) 20 March 2003 (2003-03-20) | 1-11, 15-20 | H04L27/26 |
| A | * paragraphs [0073], [0097], [0102] * <br> * paragraph [0105] - paragraph [0109] * <br> * paragraphs [0123], [0128] * <br> * paragraph [0131] - paragraph [0133] * <br> * paragraphs [0138], [0014] * <br> * figures 4,6,7,8A,9-11 * | 12-14 | |
| X | WO 2004/075436 A (SAMSUNG ELECTRONICS CO., LTD) 2 September 2004 (2004-09-02) | 1,18-20 | |
| A | * page 8, line 1 - page 9, line 17 * <br> * page 13, line 7 - line 27 * <br> * page 16, line 16 - line 33 * <br> * figures 2-4 * | 2-17 | |
| A | EP 1 471 663 A (SAMSUNG ELECTRONICS CO., LTD) 27 October 2004 (2004-10-27) <br> * paragraph [0078] - paragraph [0094] * <br> * paragraph [0101] * <br> * paragraph [0108] - paragraph [0116] * <br> * paragraph [0165] - paragraph [0169] * | 1-20 | |
| A | 3GPP: "OFDM with interference control for improved HSDPA coverage" <br> 3GPP TSG RAN WG1 MEETING #37, <br> May 2004 (2004-05), pages 1-11, <br> XP002310556 <br> * paragraph [003.] - paragraph [04.2] * | 1-20 | |

-/--

**TECHNICAL FIELDS SEARCHED (IPC)**

H04L
H04Q
H04B

The present search report has been drawn up for all claims

| Place of search | Date of completion of the search | Examiner |
|---|---|---|
| Munich | 14 March 2006 | Bösch, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**European Patent Office**

**EUROPEAN SEARCH REPORT**

Application Number

EP 05 29 2301

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2004/038988 A (QUALCOMM, INCORPORATED) 6 May 2004 (2004-05-06) <br> * paragraphs [1010], [1011] * <br> * paragraph [1027] - paragraph [1033] * <br> * paragraph [1037] * <br> * paragraph [1041] - paragraph [1047] * <br> * paragraph [1050] - paragraph [1054] * <br> * paragraph [1059] - paragraph [1062] * <br> * paragraph [1066] * <br> * paragraph [1075] - paragraph [1079] * <br> * paragraph [1089] - paragraph [1091] * <br> * paragraph [1122] * <br> ----- | 1-20 | |
| A | DE 100 58 336 A1 (KURPJUHN, TOBIAS P; BRUNNER, CHRISTOPHER; NOSSEK, JOSEF) 20 February 2003 (2003-02-20) <br> * paragraphs [0009], [0010] * <br> ----- | 1-20 | |

TECHNICAL FIELDS SEARCHED (IPC)

The present search report has been drawn up for all claims

| Place of search | Date of completion of the search | Examiner |
|---|---|---|
| Munich | 14 March 2006 | Bösch, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 29 2301

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2006

| Patent document cited in search report | | | Publication date | Patent family member(s) | | | Publication date |
|---|---|---|---|---|---|---|---|
| US 2003053413 | A1 | | 20-03-2003 | BR | 0212206 | A | 21-09-2004 |
| | | | | CA | 2459129 | A1 | 06-03-2003 |
| | | | | CN | 1561592 | A | 05-01-2005 |
| | | | | EP | 1422853 | A1 | 26-05-2004 |
| | | | | HU | 0401806 | A2 | 29-11-2004 |
| | | | | WO | 03019837 | A1 | 06-03-2003 |
| | | | | NO | 20040839 | A | 01-06-2004 |
| | | | | NZ | 531435 | A | 29-04-2005 |
| WO 2004075436 | A | | 02-09-2004 | EP | 1595341 | A1 | 16-11-2005 |
| | | | | JP | 3669991 | B2 | 13-07-2005 |
| | | | | JP | 2004253925 | A | 09-09-2004 |
| EP 1471663 | A | | 27-10-2004 | CN | 1607743 | A | 20-04-2005 |
| | | | | US | 2004213187 | A1 | 28-10-2004 |
| WO 2004038988 | A | | 06-05-2004 | NONE | | | |
| DE 10058336 | A1 | | 20-02-2003 | NONE | | | |

EPO FORM P0459

For more details about this annex : see Official Journal of the European Patent Office, No. 12/82